(19) **Europäisches Patentamt European Patent Office Office européen des brevets**

(11) **EP 4 653 498 A1**

(12) **EUROPEAN PATENT APPLICATION**
published in accordance with Art. 153(4) EPC

(43) Date of publication:
26.11.2025 Bulletin 2025/48

(21) Application number: 24744909.3

(22) Date of filing: 18.01.2024

(51) International Patent Classification (IPC):
$C08L\ 69/00^{(2006.01)}$    $C08L\ 55/02^{(2006.01)}$
$C08G\ 64/42^{(2006.01)}$    $C08G\ 64/34^{(2006.01)}$

(52) Cooperative Patent Classification (CPC):
C08G 64/34; C08G 64/42; C08L 55/02; C08L 69/00

(86) International application number:
PCT/KR2024/000913

(87) International publication number:
WO 2024/155130 (25.07.2024 Gazette 2024/30)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 19.01.2023 KR 20230008271

(71) Applicant: LG CHEM, LTD.
Seoul 07336 (KR)

(72) Inventor: MOON, Geun Hyeong
Daejeon 34122 (KR)

(74) Representative: Plasseraud IP
104 Rue de Richelieu
CS92104
75080 Paris Cedex 02 (FR)

(54) **RESIN COMPOSITION AND MOLDED ARTICLE INCLUDING SAME**

(57) The present invention relates to a polyalkylene carbonate/graft copolymer resin composition having improved elongation properties and surface properties, and a molded article including the same, and provides a resin composition including a polyalkylene carbonate resin including an end capping portion, and a graft copolymer, wherein the end capping portion is a unit derived from any one or more selected from maleic anhydride, 4-t-octylphenol, 2-naphthol, 4-n-butoxyphenol, 4-phenylphenol, 4-(benzyloxy)phenol, and 4-t-butylphenol, and a molded article including the same.

Description

## TECHNICAL FIELD

### Cross-reference to Related Applications

This application claims the benefit of Korean Patent Application No. 10-2023-0008271, filed on January 19, 2023, in the Korean Intellectual Property Office, the disclosure of which is incorporated herein in its entirety by reference.

### Technical Field

The present invention relates to a polyalkylene carbonate/graft copolymer resin composition having improved elongation properties and surface properties, and a molded article including the same.

## BACKGROUND ART

Polyalkylene carbonate (PAC) is a resin using carbon dioxide, which is a primary culprit of greenhouse gases, as a raw material through carbon capturing utilization (CCU), and provides great benefits such as excellent flexibility, transparency, barrier properties, and clean burning, and thus is used for daily necessities.

However, the polyalkylene carbonate is provided with poor heat resistance, strength, and molding processability, and thus is hard to be used alone, and instead, is blended with other resins such as ABS and then used through extrusion molding.

Meanwhile, the ABS has poor weather resistance due to the double bond of butadiene and thus has a high risk of yellowing when used long term to be hardly added in a large amount in a composition.

In addition, the polyalkylene carbonate and the ABS have poor compatibility, causing phase separation, and thus have physical properties that are hardly maintained at a desired level.

Accordingly, there is a need to develop a resin composition having improved compatibility when polyalkylene carbonate and ABS are blended and thus having improved yellowing characteristics and surface texture while keeping excellent physical properties of the ABS.

[Related Art Document]

[Patent Document]

(Patent Document 1) KR10-2013-0000031A (2013. 01. 02.)

## DISCLOSURE OF THE INVENTION

### TECHNICAL PROBLEM

The present invention is designed to overcome the limitations of the related art, and thus, an aspect of the present invention provides a resin composition having improved molding processability resulting from excellent compatibility, and improved elongation and surface properties while keeping excellent physical properties (tensile strength and the like) of a graft copolymer.

Another aspect of the present invention provides a molded article manufactured using the resin composition and thus containing the resin composition.

### TECHNICAL SOLUTION

In order to address the above-described tasks, the present invention provides a resin composition and a molded article.

(1) According to an aspect of the present invention, provided is a resin composition including a polyalkylene carbonate resin including an end capping portion, and a graft copolymer, wherein the end capping portion is a unit derived from any one or more selected from maleic anhydride, 4-t-octylphenol, 2-naphthol, 4-n-butoxyphenol, 4-phenylphenol, 4-(benzyloxy)phenol, and 4-t-butylphenol.

(2) The present invention provides the resin composition according to (1) above, wherein the end capping portion is a maleic anhydride derived unit.

(3) The present invention provides the resin composition according to (1) or (2) above, wherein the polyalkylene carbonate resin includes the end capping portion in an amount of 0.5 wt% to 2.0 wt%.

(4) The present invention provides the resin composition according to any one of (1) to (3) above, wherein the polyalkylene carbonate resin and the graft copolymer are present in a weight ratio of 1:0.5 to 9.

(5) The present invention provides the resin composition according to any one of (1) to (4) above, wherein the graft copolymer includes a conjugated diene-based rubber core, and a shell containing an aromatic vinyl-based monomer derived unit and a vinyl cyan-based monomer derived unit.

(6) The present invention provides the resin composition according to (5) above, wherein the graft copolymer includes the conjugated diene-based rubber core in an amount of 30 wt% to 70 wt%, and the shell containing an aromatic vinyl-based monomer derived unit and a vinyl cyan-based monomer derived unit in an amount of 30 wt% to 70 wt%, and the shell includes the aromatic vinyl-based monomer derived unit in an amount of 55 wt% to 85 wt% and the vinyl cyan-based monomer derived unit in an amount of 15 wt% to 45 wt%.

(7) The present invention provides the resin composition according to any one of (1) to (6) above, wherein the polyalkylene carbonate resin further includes an antioxidant derived unit.

(8) The present invention provides the resin composition according to any one of (1) to (7) above, wherein the polyalkylene carbonate resin has a heat resistance temperature of 230 °C to 300 °C and a melt index of 1 g/10 min to 25 g/10 min measured at 190 °C with a load of 2.16 kg.

(9) The present invention provides the resin composition according to any one of (1) to (8) above, wherein the resin composition further includes a compatibilizer.

(10) According to another aspect of the present invention, provided is a molded article including the resin composition according to any one of (1) to (9) above.

## ADVANTAGEOUS EFFECTS

A resin composition according to the present invention includes a polyalkylene carbonate including an end capping portion, and a graft copolymer, and thus has improved molding processability resulting from excellent compatibility, and also has improved elongation and surface properties while keeping excellent mechanical properties such as tensile properties of the graft copolymer.

In addition, a molded article according to the present invention is manufactured from the resin composition described above and thus includes the resin composition, thereby having excellent mechanical properties, and excellent elongation and surface properties.

## MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Definition of Terms

Herein, the term 'derived unit' may indicate a component or structure derived from a certain compound, or the compound itself.

Herein, the term 'composition' includes reaction products and decomposition products formed from materials of the composition as well as a mixture of materials including the composition.

## Resin composition

The present invention provides a resin composition having excellent elongation and surface properties.

The resin composition according to an embodiment of the present invention includes a polyalkylene carbonate resin including an end capping portion, and a graft copolymer, and the end capping portion is a unit derived from any one or more selected from maleic anhydride, 4-t-octylphenol, 2-naphthol, 4-n-butoxyphenol, 4-phenylphenol, 4-(benzyloxy) phenol, and 4-t-butylphenol.

Polyalkylene carbonate (PAC) is a resin using carbon dioxide, which is a primary culprit of greenhouse gases, as a raw material, and provides great benefits such as excellent flexibility, transparency, barrier properties, and clean burning, and thus is used for daily necessities. However, the polyalkylene carbonate is provided with poor heat resistance, strength, and molding processability, and thus is hard to be used alone, and instead, is blended with other resins such as ABS and used through extrusion molding. However, the ABS has poor weather resistance due to the double bond of butadiene and thus has a high risk of yellowing when used long term to be hardly added in a large amount in a composition, and the polyalkylene carbonate and the ABS have poor compatibility, causing phase separation, and thus have physical properties that are hardly maintained at a desired level.

However, the resin composition according to the present invention includes a polyalkylene carbonate whose end is modified with an end capping agent, and thus has excellent compatibility with the ABS and improved elongation and surface properties.

Hereinafter, the resin composition of the present invention will be divided into sub components and described in more detail.

Polyalkylene carbonate resin

A polyalkylene carbonate resin according to the present invention is a resin whose end is modified through an end capping agent, specifically a resin having a structure in which an end of polyalkylene carbonate is modified through an end capping agent and an end capping portion, which is a unit derived from the end capping agent, is bonded.

In general, polyalkylene carbonate has an issue of low thermal stability resulting from thermal decomposition at a relatively low temperature due to the presence of a carboxyl group of a carbonate group at an end. However, the polyalkylene carbonate resin according to the present invention is a resin in which an end of polyalkylene carbonate is modified through an end capping agent, that is, a carboxyl group in the polyalkylene carbonate is esterified through an end capping agent to form an ester group at the end, and may thus exhibit increased thermal decomposition temperature of 50 °C or greater, specifically 60 °C or greater, compared to general polyalkylene carbonate.

In this case, the end capping portion may be a unit derived from any one or more selected from maleic anhydride, 4-t-octylphenol, 2-naphthol, 4-n-butoxyphenol, 4-phenylphenol, 4- (benzyloxy)phenol, and 4-t-butylphenol, and specifically, the end capping portion may be a maleic anhydride derived unit.

In addition, the polyalkylene carbonate may include an end capping portion in an amount of 0.5 wt% to 2.0 wt%, specifically 0.5 wt% to 1.0 wt%, and in this case, an end capping portion serves as an acid catalyst to promote hydrolysis of the resin, and accordingly, the above-described thermal stability improvement due to end capping may be sufficiently provided without degradation in thermal stability.

In addition, the polyalkylene carbonate resin may have a heat resistance temperature of 230 °C to 300 °C, specifically 250 °C to 280 °C.

In addition, the polyalkylene carbonate resin may have a melt flow index measured at 190 °C with a load of 2.16 kg of 1 g/10 min to 25 g/10 min, specifically 1 g/10 min to 15 g/10 min, 1 g/10 min to 10 g/10 min, or 3 g/10 min to 8 g/10 min.

In addition, the polyalkylene carbonate resin according to an embodiment of the present invention may further include an antioxidant derived unit when needed, and in this case, the antioxidant is not particularly limited as long as it is commonly known in the art, but may be, for example, any one or more selected from a phenol-based antioxidant, an aromatic amine-based antioxidant, a phosphorus-based antioxidant, and a sulfur-based antioxidant.

Meanwhile, the polyalkylene carbonate resin including the end capping portion according to an embodiment of the present invention may be manufactured by subjecting the polyalkylene carbonate and the end capping agent, and, when needed, the antioxidant to an extrusion reaction at a temperature of 170 °C to 190 °C in the presence of a reaction initiator, and the extrusion reaction may be performed using commonly known mixing processing instrument such as a twin-screw extruder, a single-screw extruder, a roll mill, a kneader, or a Banbury mixer.

In this case, the polyalkylene carbonate used in the extrusion reaction is a polymer having a repeating unit of $-COO-(CH_2)_n-CH_2CH_2O-$ (n is an integer of 2 to 12), and may be, for example, one or more selected from the group consisting of polyethylene carbonate, polypropylene carbonate, polypentene carbonate, polyhexene carbonate, polyoctene carbonate, and polycyclohexene carbonate, and may specifically be polyethylene carbonate or polypropylene carbonate.

The polyalkylene carbonate resin may have a weight average molecular weight of 10,000 g/mol to 1,000,000 g/mol, specifically 50,000 g/mol to 500,000 g/mol, or 100,000 g/mol to 200,000 g/mol.

In addition, the polyalkylene carbonate resin may be a copolymer or a terpolymer prepared through copolymerization using an epoxide-based compound and carbon dioxide as monomers in the presence of an organometallic catalyst in an organic solvent, and in this case, the epoxide-based compound may be, for example, one or more selected from the group consisting of ethylene oxide, propylene oxide, 1-butene oxide, 2-butene oxide, isobutylene oxide, 1-pentene oxide, 2-pentene oxide, 1-hexene oxide, 1-octene oxide, cyclopentene oxide, cyclohexene oxide, styrene oxide, and butadiene monoxide, and the carbon dioxide may be regulated to 5 to 30 atmospheres and the copolymerization may be performed at 20 °C to 120 °C.

Graft copolymer

In the present invention, the graft copolymer may be an ABS resin, and the graft copolymer may specifically include a conjugated diene-based rubber core, and a shell containing an aromatic vinyl-based monomer derived unit and a vinyl cyan-based monomer derived unit, specifically the conjugated diene-based rubber core in an amount of 30 wt% to 70 wt%, and the shell containing an aromatic vinyl-based monomer derived unit and a vinyl cyan-based monomer derived unit in an amount of 30 wt% to 70 wt%, and the shell may include the aromatic vinyl-based monomer derived unit in an amount of 55 wt% to 85 wt% and the vinyl cyan-based monomer derived unit in an amount of 15 wt% to 45 wt%. In this case, impact resistance may be greater.

Meanwhile, the graft copolymer may be prepared by graft polymerizing an aromatic vinyl-based monomer and a vinyl cyan-based monomer to a conjugated diene-based rubber polymer, and in this case, the conjugated diene-based rubber polymer may be a homopolymer of a conjugated diene-based monomer, a copolymer of a conjugated diene-based monomer and an aromatic vinyl-based monomer, or a copolymer of a conjugated diene-based monomer and a vinyl cyan-based monomer. The conjugated diene-based rubber polymer may be prepared by emulsion polymerizing monomers in the presence of a polymerization initiator and an emulsifier, and the graft polymer may be prepared by emulsion polymerizing a conjugated diene-based rubber polymer and an aromatic vinyl-based monomer and a vinyl cyan-based monomer in the presence of a polymerization initiator and an emulsifier.

The conjugated diene-based monomer may be, for example, one or more selected from the group consisting of 1,3-butadiene, isoprene, 2,3-dimethyl-1,3-butadiene, and 2-phenyl-1,3-butadiene, specifically 1,3-butadiene.

The aromatic vinyl-based monomer may be, for example, one or more selected from the group consisting of styrene, $\alpha$-methylstyrene, p-methylstyrene, o-ethylstyrene, p-ethylstyrene, and vinyltoluene, specifically, styrene.

In addition, the vinyl cyan-based monomer may be one or more selected from the group consisting of acrylonitrile, methacrylonitrile, and ethacrylonitrile, specifically acrylonitrile.

The emulsifier added during each of the above emulsion polymerizations may be selected from alkali salts of fatty acids, alkali salts of rosin acids, alkali salts of oleic acids, and a combination of two or more thereof, and the polymerization initiator may be selected from sodium persulfate, potassium persulfate, cumene hydroperoxide, diisopropylbenzene hydroperoxide, and a combination of two or more thereof.

In addition, when the emulsion polymerization is performed, a molecular weight regulator may be further added as needed.

Resin composition

In the present invention, the resin composition may include a polyalkylene carbonate resin and a graft copolymer in a weight ratio of 1:0.5 to 9, specifically 1:1 to 9 or 1:2 to 5, and in this case, elongation and tensile strength may be well balanced.

In addition, with a greater proportion of the polyalkylene carbonate resin, elongation properties increase, but degradation in tensile strength may be caused, and the resin composition according to an embodiment of the present invention may include a polyalkylene carbonate resin and a graft copolymer in a ratio regulated within the above range depending on the intended use.

Meanwhile, the resin composition according to an embodiment of the present invention may further include a compatibilizer when needed, and the compatibilizer may be used without particular limitation as long as it is a material commonly known in the art, and may be, for example, any one or more selected from maleic anhydride, hexamethylene diisocyanate, methylenediphenyl diisocyanate, methyl methacrylate, and styrene copolymer.

In addition, the resin composition may further include any one or more additives selected from antioxidants, ultraviolet absorbers, flame retardants, internal release agents, lubricants, light stabilizers, release agents, plasticizers, antibacterial agents, organic fillers, inorganic fillers, pigments, and crosslinking agents, when needed.

**Molded article**

The present invention provides a molded article manufactured using the resin composition and thus containing the resin composition.

The molded article according to an embodiment of the present invention may be manufactured by processing (such as injecting) the resin composition, and may be, for example, one or more selected from the group consisting of films, packaging materials, alignment films, injection molded articles, blow molded articles, laminates, tapes, non-woven fabrics, and threads.

The molded article according to an embodiment of the present invention includes the above resin composition, and may thus have excellent impact resistance, elongation, and surface properties.

Hereinafter, examples of the present invention will be described in detail in such a manner that it may easily be performed by a person skilled in the art to which the present invention pertains. The present invention may, however, be embodied in many different forms, and is not limited to Examples set forth herein.

**Example**

Information on materials used in Preparation Examples, Examples, and Comparative Examples is as follows.

Polyethylene carbonate resin: a weight average molecular weight of 146,889 g/mol, QPAC® 25 (EMPOWER MATERIALS)
Graft copolymer: butadiene in an amount of 60 wt%, a weight ratio of styrene and acrylonitrile of 75:25, HF380 (LG CHEM)

**Preparation Example 1**

100 parts by weight of polyethylene carbonate resin, 1 part by weight of maleic anhydride, and 0.1 part by weight of dicumyl peroxide were placed in a twin-screw extruder, and subjected to an extrusion reaction at an extrusion temperature of 170 °C to prepare a polyethylene carbonate resin including an end capping portion.

**Preparation Example 2**

A polyethylene carbonate resin including an end capping portion was prepared in the same manner as in Preparation Example 1, except that 4-t-butylphenol was used instead of maleic anhydride unlike Example 1.

**Preparation Example 3**

A polyethylene carbonate resin including an end capping portion was prepared in the same manner as in Preparation Example 1, except that 4-t-butoxyphenol was used instead of maleic anhydride unlike Example 1.

**Example 1**

The polyethylene carbonate resin including the end capping portion prepared in Preparation Example 1 and a graft copolymer were mixed in a weight ratio of 1:4 to prepare a resin composition.
The resin composition was extruded at 200 °C using an extruder to obtain a pellet-shaped molded article.

**Example 2**

A resin composition and a molded article were prepared in the same manner as in Example 1, except that the end capping portion-containing polyethylene carbonate resin and the graft copolymer were mixed in a weight ratio of 1:1.5 unlike Example 1.

**Example 3**

A resin composition and a molded article were prepared in the same manner as in Example 1, except that the end capping portion-containing polyethylene carbonate resin and the graft copolymer were mixed in a weight ratio of 1:0.67 unlike Example 1.

**Example 4**

A resin composition and a molded article were prepared in the same manner as in Example 1, except that the polyethylene carbonate resin including the end capping portion prepared in Preparation Example 2 was used unlike Example 1.

**Example 5**

A resin composition and a molded article were prepared in the same manner as in Example 1, except that the polyethylene carbonate resin including the end capping portion prepared in Preparation Example 3 was used unlike Example 1.

**Comparative Example 1**

A graft copolymer was extruded at 200 °C using an extruder to obtain a pellet-shaped molded article.

**Comparative Example 2**

A resin composition and a molded article were prepared in the same manner as in Example 1, except that polyethylene carbonate (QPAC® 25, EMPOWER MATERIALS) was used instead of the polyethylene carbonate resin including the end capping portion prepared in Preparation Example 1 unlike Example 1.

**Experimental Example 1**

In order to determine whether the modified polyethylene carbonate containing an end capping portion prepared in Preparation Examples 1 to 3 was modified, the polyalkylene carbonate (Comparative Preparation Example) used as a raw material, thermal decomposition temperature, and melt index were compared and analyzed, and the results are shown in Table 1 below.

(1) Thermal decomposition temperature (Td, °C)

Thermal decomposition temperature was measured using a thermogravimetric analyzer (TGA, Thermogravimetric Analyzer with Large Furnace (LF), Mettler Toledo) at a weight loss rate of 1.0% while increasing the temperature from 30 °C to 400 °C at 10 °C/min.

(2) Melt index (MFI, g/10 min)

Melt index was measured using a fluidity tester after preheating for 6 minutes at 190 °C with a load of 2.16 kg.

[Table 1]

| Item | Preparation Example 1 | Preparation Example 2 | Preparation Example 3 | Preparation Comparative Example |
|---|---|---|---|---|
| Td (°C) | 258.6 | 223.6 | 239.1 | 196.2 |
| Melt index (g/10 min) | 7.1 | 4.2 | 3.6 | 1.5 |

Table 1 shows that Preparation Examples 1 to 3 had increased thermal decomposition temperature and melt index compared to the polyethylene carbonate resin of Comparative Preparation Example, and accordingly, it is determined that the end of the polyethylene carbonate resin including the end capping portion of Preparation Examples 1 to 3 were modified.

**Experimental Example 2**

The melt index of the resin composition prepared in Examples and Comparative Examples and the tensile strength, elongation, and whiteness index of specimens obtained from the resin compositions were measured, and the results are shown in Tables 2 and 3 below.

(1) Melt index

Each resin composition was measured using a fluidity tester after preheating for 6 minutes at 200 °C with a load of 2.16 kg.
Meanwhile, in Comparative Example 1, the melt index of the graft copolymer was measured.

(2) Tensile strength (MPa) and Elongation (%)

Each molded article was manufactured into three dumbbell-shaped specimens according to ASTM D412 regulations, and then the tensile strength was measured at a rate of 50 mm/min using univer testig machine (UTM, Instron). Each measurement was performed three times, and an average value was obtained as the result.
Each molded article was manufactured into three dumbbell-shaped specimens according to ASTM D638 regulations, and then elongation when each specimen was cut was measured in the same conditions as the tensile strength measurement, and each measurement was performed three times and an average value was obtained as the result.

(3) Whiteness index

A temperature of 170 °C was applied to each molded article to prepare a thin film (thickness: 30 μm), and a specimen with a size of 100 mm × 100 mm (width × height) was prepared. Whiteness index of each specimen was measured according to CIE STM 1979 using the UltraScan PRO model.

$$[\text{Equation 1}]$$

$$\text{Whiteness Index (WI)} = Y - a(x - xn) - b(y - yn)$$

In Equation 1, Y indicates a luminance factor, x and y indicate chromaticity coordinates of a measurement object, xn and yn indicate chromaticity coordinates of a perfect reflector (reflectance = 100%), a = 800, and b = 1700

Meanwhile, for a completely white object, WI = 100, and when treated with a fluorescent whitening agent, and the like, WI may increase up to 150, indicating that an object with a higher whiteness index value has a higher whiteness.

[Table 2]

| Item | Example | | | | | Comparative Example |
|---|---|---|---|---|---|---|
| | 1 | 2 | 3 | 4 | 5 | 1 |
| MFI (g/10 min) | 3.7 | 7.4 | 9.6 | 3.4 | 3.0 | 1.3 |
| Elongation | 125 | 158 | 333 | 183 | 133 | 100 |
| Whiteness index | 126 | 118 | 107 | 125 | 128 | 100 |

In Table 2, the elongation and whiteness index of Examples 1 to 5 were obtained through the method described above and then indexed (percentage) with respect to the results of Comparative Example 1.

[Table 3]

| Item | Example | | | | | Comparative |
|---|---|---|---|---|---|---|
| | | | | | | Example |
| | 1 | 2 | 3 | 4 | 5 | 2 |
| MFI (g/10 min) | 3.7 | 7.4 | 9.6 | 3.4 | 3.0 | 1.5 |
| Tensile strength | 364 | 336 | 273 | 336 | 382 | 100 |
| Whiteness index | 96 | 90 | 81 | 95 | 98 | 100 |

In Table 3, the tensile strength and whiteness index of Examples 1 to 5 were obtained through the method described above and then indexed (percentage) with respect to the results of Comparative Example 2.

Table 2 shows that the resin compositions of Examples 1 to 5 had an MFI of 3.0 to 9.6, which was twice or greater than that of Comparative Example 1, and also elongation and whiteness index were greatly improved.

In addition, Table 3 shows that the resin compositions of Examples 1 to 5 had an MFI increase of at least twice compared to Comparative Example 2, and had a significant improvement in tensile strength while having the same level of whiteness index.

In this case, Comparative Example 1 is a graft copolymer and a molded article obtained therefrom, and Comparative Example 2 is the same resin composition as Example 1 except that it contains polyethylene carbonate without an end capping portion, and a molded article obtained therefrom.

Meanwhile, polyalkylene carbonate (PAC) has excellent flexibility and transparency, but comes with poor heat resistance, strength, and molding processability, and thus is hard to be used alone, and accordingly, is blended with other resins such as a graft copolymer (ABS) and used through extrusion molding in general. However, the graft copolymer (ABS) has a high risk of yellowing and thus is hardly added in a large amount in a composition, and the polyalkylene carbonate and the ABS have poor compatibility, and thus physical properties at a desired level are hardly obtainable. The limitations may also be determined through Comparative Example 1, which has poor MFI, elongation, and whiteness index, and Comparative Example 2, which has poor MFI and whiteness index.

However, as determined in Tables 2 and 3, the resin compositions of Examples 1 to 5 according to an embodiment of the present invention have greatly improved MFI, and also shows overall excellent properties in tensile strength, elongation, and whiteness index, and the results above show that the resin composition according to the present invention includes polyalkylene carbonate whose end is modified with an end capping agent, and thus has excellent compatibility with a graft copolymer (ABS), resulting in excellent molding processability, elongation, and surface properties.

## Claims

1. A resin composition comprising:

   a polyalkylene carbonate resin comprising an end capping portion; and
   a graft copolymer,
   wherein the end capping portion is a unit derived from any one or more selected from maleic anhydride, 4-t-octylphenol, 2-naphthol, 4-n-butoxyphenol, 4-phenylphenol, 4-(benzyloxy)phenol, and 4-t-butylphenol.

2. The resin composition of claim 1, wherein the end capping portion is a maleic anhydride derived unit.

3. The resin composition of claim 1, wherein the polyalkylene carbonate resin comprises the end capping portion in an amount of 0.5 wt% to 2.0 wt%.

4. The resin composition of claim 1, wherein the polyalkylene carbonate resin and the graft copolymer are present in a weight ratio of 1:0.5 to 9.

5. The resin composition of claim 1, wherein the graft copolymer comprises a conjugated diene-based rubber core; and a shell containing an aromatic vinyl-based monomer derived unit and a vinyl cyan-based monomer derived unit.

6. The resin composition of claim 5, wherein the graft copolymer comprises:

   the conjugated diene-based rubber core in an amount of 30 wt% to 70 wt%; and
   the shell containing an aromatic vinyl-based monomer derived unit and a vinyl cyan-based monomer derived unit in an amount of 30 wt% to 70 wt%, and
   the shell contains the aromatic vinyl-based monomer derived unit in an amount of 55 wt% to 85 wt% and the vinyl cyan-based monomer derived unit in an amount of 15 wt% to 45 wt%.

7. The resin composition of claim 1, wherein the polyalkylene carbonate resin further comprises an antioxidant derived unit.

8. The resin composition of claim 1, wherein the polyalkylene carbonate resin has a heat resistance temperature of 230 °C to 300 °C and a melt index of 1 g/10 min to 25 g/10 min measured at 190 °C with a load of 2.16 kg.

9. The resin composition of claim 1, wherein the resin composition further comprises a compatibilizer.

10. A molded article comprising the resin composition according to claim 1.

## INTERNATIONAL SEARCH REPORT

| | |
|---|---|
| International application No. | |
| | **PCT/KR2024/000913** |

### A. CLASSIFICATION OF SUBJECT MATTER

**C08L 69/00**(2006.01)i; **C08L 55/02**(2006.01)i; **C08G 64/42**(2006.01)i; **C08G 64/34**(2006.01)i

According to International Patent Classification (IPC) or to both national classification and IPC

### B. FIELDS SEARCHED

Minimum documentation searched (classification system followed by classification symbols)

C08L 69/00(2006.01); C08F 279/02(2006.01); C08G 64/04(2006.01); C08G 64/42(2006.01); C08J 3/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 말단 캡핑(end capping), 폴리알킬렌카보네이트(polyalkylene carbonate), 그라프트 공중합체(graft copolymer), 무수 말레인산(maleic anhydride), 아크릴로나이트릴 부다디엔 스타이렌 공중합체(acrylonitrile butadiene styrene copolymer, ABS), 상용화제(compatibilizer), 산화방지제(antioxidant)

### C. DOCUMENTS CONSIDERED TO BE RELEVANT

| Category* | Citation of document, with indication, where appropriate, of the relevant passages | Relevant to claim No. |
|---|---|---|
| Y | YAO, M. et al. Improved thermal stability and mechanical properties of poly(propylene carbonate) by reactive blending with maleic anhydride. Journal of applied polymer science. 2011, vol. 120, no. 6, pp. 3565-3573.<br>See abstract; end-capping PPC and mechanical properties; and figure 7. | 1-10 |
| Y | KR 10-2015-0002604 A (KANEKA CORPORATION) 07 January 2015 (2015-01-07)<br>See claims 1 and 19; and paragraphs [0051], [0055], [0059], [0060], [0067], [0068], [0103] and [0105]. | 1-10 |
| A | KR 10-1349711 B1 (CHEIL INDUSTRIES INC.) 10 January 2014 (2014-01-10)<br>See entire document. | 1-10 |
| A | US 4066630 A (DIXON, D. D. et al.) 03 January 1978 (1978-01-03)<br>See entire document. | 1-10 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 April 2024** | **24 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 653 498 A1

**INTERNATIONAL SEARCH REPORT**

International application No.

**PCT/KR2024/000913**

**C.     DOCUMENTS CONSIDERED TO BE RELEVANT**

| Category* | Citation of document, with indication, where appropriate, of the relevant passages | Relevant to claim No. |
|---|---|---|
| A | US 10370503 B2 (NORNER IP AS) 06 August 2019 (2019-08-06)<br>See entire document. | 1-10 |

Form PCT/ISA/210 (second sheet) (July 2022)

11

## INTERNATIONAL SEARCH REPORT
### Information on patent family members

International application No.

**PCT/KR2024/000913**

| Patent document cited in search report | | | Publication date (day/month/year) | Patent family member(s) | | | Publication date (day/month/year) |
|---|---|---|---|---|---|---|---|
| KR | 10-2015-0002604 | A | 07 January 2015 | CN | 104704051 | A | 10 June 2015 |
| | | | | CN | 104704051 | B | 12 September 2017 |
| | | | | CN | 105646791 | A | 08 June 2016 |
| | | | | CN | 105646791 | B | 09 November 2018 |
| | | | | EP | 2840116 | A1 | 25 February 2015 |
| | | | | EP | 2840116 | B1 | 02 January 2019 |
| | | | | JP | 6185910 | B2 | 23 August 2017 |
| | | | | KR | 10-2025455 | B1 | 25 September 2019 |
| | | | | US | 10138314 | B2 | 27 November 2018 |
| | | | | US | 2015-0065651 | A1 | 05 March 2015 |
| | | | | WO | 2013-157569 | A1 | 24 October 2013 |
| KR | 10-1349711 | B1 | 10 January 2014 | KR | 10-2012-0075744 | A | 09 July 2012 |
| US | 4066630 | A | 03 January 1978 | | None | | |
| US | 10370503 | B2 | 06 August 2019 | CN | 105189605 | A | 23 December 2015 |
| | | | | CN | 105189605 | B | 15 January 2019 |
| | | | | EP | 2943522 | A1 | 18 November 2015 |
| | | | | EP | 2943522 | B1 | 06 May 2020 |
| | | | | JP | 2016-503118 | A | 01 February 2016 |
| | | | | JP | 6479680 | B2 | 06 March 2019 |
| | | | | KR | 10-2015-0119858 | A | 26 October 2015 |
| | | | | US | 2015-0361228 | A1 | 17 December 2015 |
| | | | | US | 2020-0032009 | A1 | 30 January 2020 |
| | | | | WO | 2014-108518 | A1 | 17 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230008271
- KR 1020130000031 A